# EUROPEAN PATENT APPLICATION

(11) **EP 0 590 892 A2**
(43) Date of publication of application: **06.04.1994**
(21) Application number: 93307577.2
(22) Date of filing: 24.09.1993
(51) Int. Cl.: G06F 15/20

(54) **Document processing apparatus**

(30) Priority: 28.09.1992 JP 283837/92
(71) Applicant: BROTHER KOGYO KABUSHIKI KAISHA, Nagoya-shi, Aichi-ken 467 (JP)
(72) Inventor: Kato, Hideo, c/o BROTHER KOGYO K.K., Nagoya-shi, Aichi-ken (JP)
(74) Representative: Senior, Alan Murray

(57) **Abstract**

In response to an instruction from a keyboard, sample document data of a sample document are read out from a floppy disk into a text memory. Predetermined items are automatically retrieved from within the sample document data thus read out and displayed on a display. If an operator changes the predetermined items displayed, data of the predetermined items in the sample data are replaced with data inputted by the operator.

## Description

This invention relates to a document processing apparatus such as a word processor for processing a document, including characters, numerals and symbols, and particularly to a document processing apparatus which can automatically retrieve predetermined items of a sample document and rewrite the items.

Conventionally, in most word processors, for all languages publicly on the market, sample documents are stored on a floppy disk (FDD). In such word processors, for example those using English, when an English letter is to be produced, a sample original document is read out from a floppy disk into a text memory and displayed from the beginning thereof. Movement of a cursor is instructed, by way of an input apparatus, to move the cursor and an item to be modified is searched out while checking the contents of the document. In this instance, when necessary, scrolling of the screen may be is required.

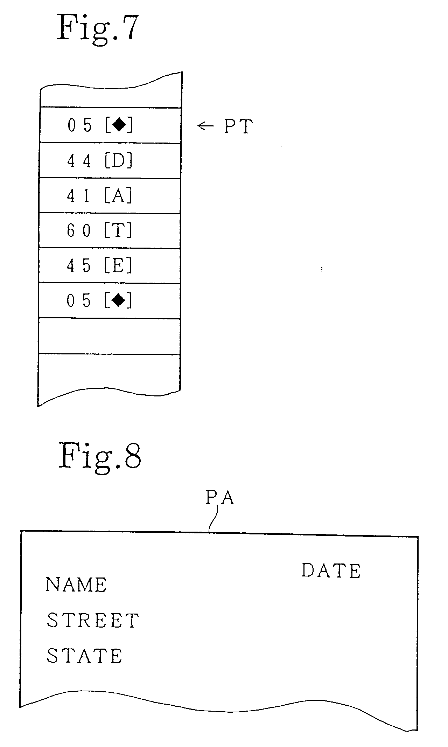

In the example, a date (DATE), a name (NAME) and address (STREET and STATE) are included in the English sample document or letter (refer to Fig. 8). They must necessarily be modified in this example before they are used. To modify the data, the sample document is read out onto the screen and the cursor is moved to the position of the first character of the DATE; if in an insert mode, a date is inputted here by way of the input apparatus and, thereafter, the original data of the DATE are deleted. In this manner, when a sample document is used, it is used in almost all cases after it has been modified.

However, it is cumbersome in that, depending upon the document, although the document includes an item which must be modified without fail, the operator must move the cursor every time to search for the item. Further, there is another problem in that an item that should be modified is overlooked.

It is an aim with the illustrated embodiment of the present invention to provide a document processing apparatus which can automatically read out, when a sample document is read out into a text memory, predetermined items from within the sample document and urge the operator to perform inputting for the individual items.

The illustrated embodiment of document processing apparatus
comprises input means for inputting characters, numerals, symbols and various instructions, a text memory for storing therein document data inputted from the input means, display means for displaying the document data stored in the text memory, sample document storage means for storing therein a sample document including a plurality of predetermined items, document produce means for producing a new document by reading out a sample document from the sample document storage means and rewriting the predetermined items included in the sample document, read-out means for reading out a sample document from the sample document storage means into the text memory, retrieving means for retrieving a prescribed predetermined item from within the sample document thus read out and causing it to be displayed on the display means and rewriting means for rewriting data of the retrieved predetermined item with input data inputted from the input means.

The document processing apparatus is structured such that the retrieving means causes all of the prescribed ones of the predetermined items to be displayed on the display means. The rewriting means is structured so as to rewrite all of data of the retrieved predetermined items at a time on the basis of data inputted from the input means.

In the document processing apparatus, when a document is to be produced by modifying a sample document, for example, the date, the address, and the name at the destination, the data must be modified without fail. Thus, in order to automatically retrieve those prescribed items, first a desired sample document is read from the sample document storage means, such as a floppy disk or a ROM, and stored into the text memory. The stored sample document is read from the text memory by the read-out means. The prescribed items, such as the date, the address, and the name at the destination, of the thus read out document are displayed on the screen by the retrieving means to urge the operator to modify the items.

The operator will input characters by way of the input means so as to modify the retrieved items on the screen and input a rewriting instruction. Consequently, the prescribed items on the screen are replaced with desired characters and/or numerals by the rewriting means. The data for the prescribed items found in the text memory is also rewritten.

While the retrieving and rewriting operations may be performed successively for each item, if it is possible to display all of the retrieved items and they are rewritten at a time, then rewriting of all of the items can be performed by a single operation.

As described so far, with the document processing apparatus, since predetermined items are automatically retrieved from within a sample document to urge rewriting of the item or items, the operator need not move the cursor to search for a prescribed item. As a result, modification can be performed easily, rapidly and accurately.

With the document processing apparatus
since all of the predetermined items are displayed at one time and all of the data of the predetermined items can be rewritten at one time with input data, there is a superior effect in that the document producing efficiency is enhanced.

The invention will be described with reference to the drawings, in which:
Fig. 1 is a perspective view of a word processor;
Fig. 2 is a block diagram of a control system of the word processor;
Fig. 3 is a flowchart of a document processing control routine;
Fig. 4 is a flowchart of a routine of sample data processing control;
Fig. 5 is a flowchart of a routine of sample data retrieving processing control;
Fig. 6 is a flowchart of a routine of sample data rewriting processing control;
Fig. 7 is a view illustrating the contents of a text memory;
Fig. 8 is a view showing an example of printing of a sample document;
Fig. 9 is a view of a screen showing sample data retrieving processing;
Fig. 10 is a view illustrating a condition wherein a first predetermined item of a sample document is rewritten on a screen and a next predetermined item is retrieved;
Fig. 11 is a view showing a retrieving screen for a second embodiment of the invention; and
Fig. 12 is a view showing an example of printing a modified document.

The first embodiment shows a case wherein the invention is applied to a word processor for the English language including a CRT display apparatus.

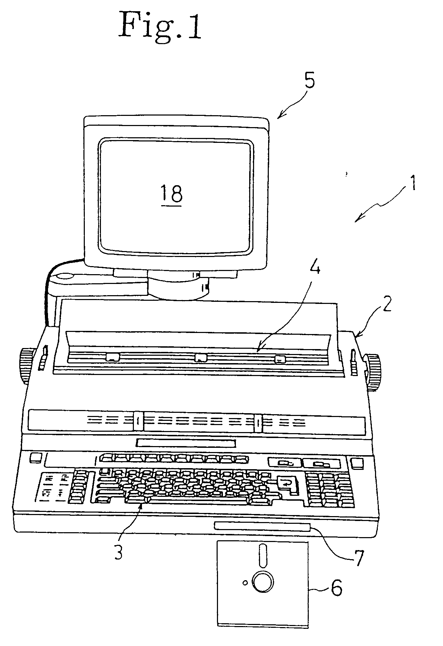

Fig. 1 shows the word processor according to the present embodiment. In Fig. 1, a keyboard 3 is the input means and is disposed at a front portion of a body frame 2 of the word processor 1. A print mechanism 4 is disposed behind the keyboard 3 in the body frame 2. A CRT display apparatus 5, which functions as the display means for displaying characters and symbols thereon, is provided above a rear portion of the body frame 2. Meanwhile, an insertion hole 7 for inserting a floppy disk 6, in which sample documents are stored, into a floppy disk drive 6 (FDD), which will be hereinafter described, is formed at a front end portion of the body frame 2.

Character keys for inputting alphabetical letters, numerals and symbols, a space key, a return key, cursor moving keys for moving the cursor on the CRT display in upward and downward directions and leftward and rightward directions, and various function keys are provided on the keyboard 3.

The print mechanism 4 described above is constituted from a mechanical structure including a carriage with a drive motor, a mechanical structure for feeding printing paper with a drive motor, a daisy wheel with drive motor, and a printing hammer with a driving solenoid.

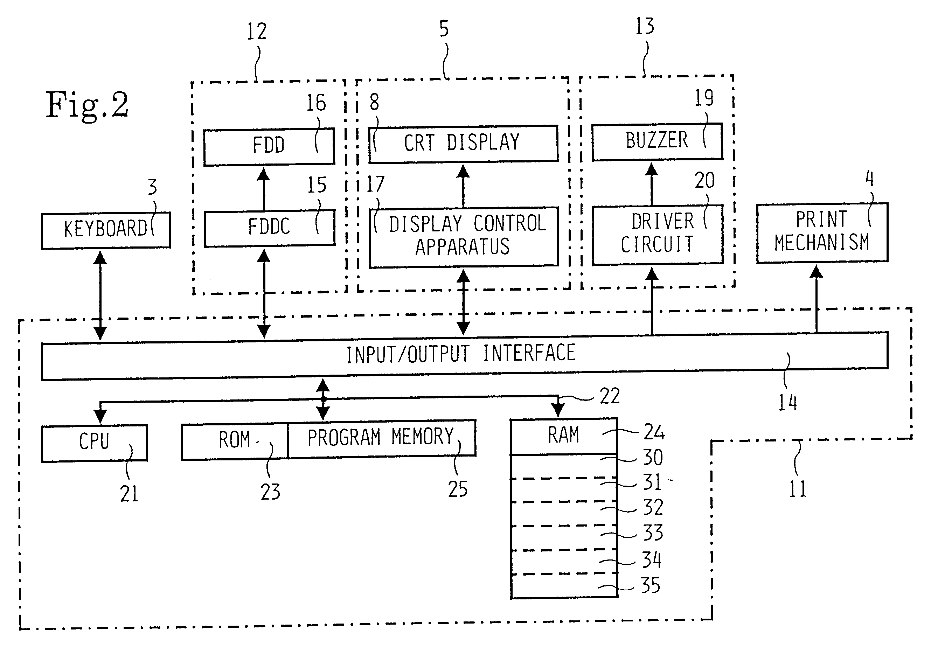

Fig. 2 is a block diagram showing the structure of a control system of the word processor 1. As shown in Fig. 2, the control system of the word processor 1 constitutes a control apparatus 11, the keyboard 3, the print mechanism 4, an external storage apparatus 12 as sample document storage means, the CRT display apparatus 5, and an alarm apparatus 13.

The keyboard 3, the print mechanism 4, the external storage apparatus 12, the CRT display apparatus 5 and the alarm apparatus 13 are individually connected to an input/output interface 14 of the control apparatus 11.

The external storage apparatus 12 described above includes a floppy disk drive (FDD) 16 for reading out a sample document stored in the floppy disk 6 as described above and a drive controller (FDDC) 15 for the FDD 16.

The CRT display apparatus 5, described above, has a display control apparatus 17 and a CRT display 18. The display control apparatus 17 comprises a displaying CPU, a ROM and a RAM connected to the displaying CPU, a character generator, and a CRT controller.

The alarm mechanism 13 described above is a buzzer 19 and a driver circuit 20 for causing the buzzer 19 to sound.

The control apparatus 11 includes a CPU 21, the input/output interface 14 connected to the CPU 21 by way of a bus 22, such as a data bus, a ROM 23, and a RAM 24.

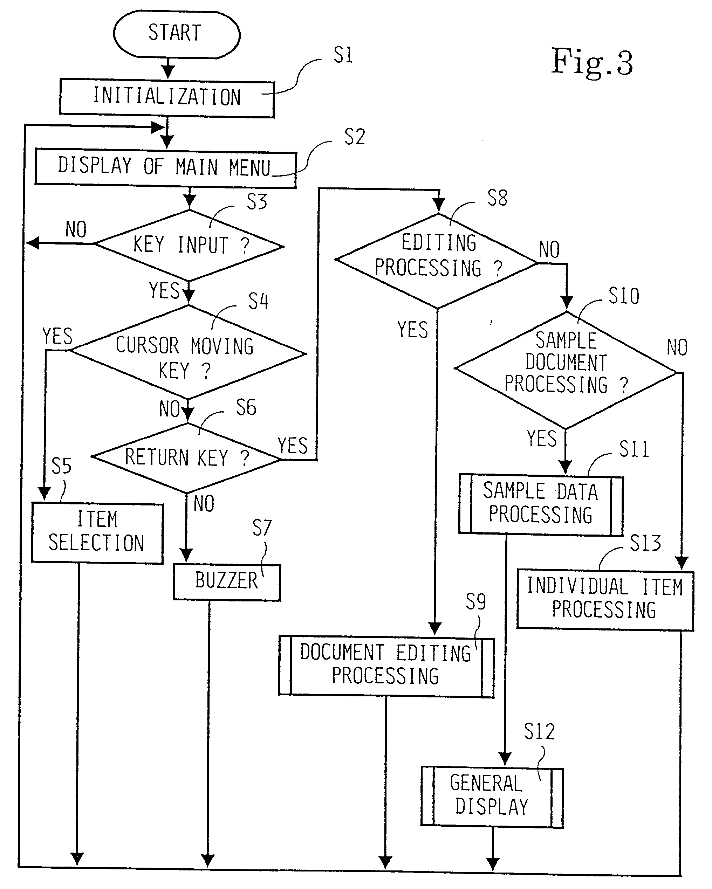

Stored in a program memory 25, of the ROM 23, are a display driving control program for controlling the display control apparatus 17 in accordance with characters, numerals, and symbols inputted from the keyboard 3 and character codes or symbol codes of characters of a sample document stored in a text memory 30, a control program for executing reading out of a sample document, a retrieving control program for retrieving a prescribed predetermined item from within the thus read out document and controlling the display control apparatus 17 in order to execute control corresponding to Figs. 3 to 6, a rewriting control program for rewriting the thus retrieved predetermined item with input data inputted from the keyboard 3, and a printing driving control program for controlling the print mechanism 4 in accordance with document data of the text memory 30.

The text memory 30, a text read pointer (pointer value is represented by PT) 31 and a text end pointer (pointer value is represented by EA) 32 for the text memory 30, a data buffer 33, a buffer pointer (BP) 34 for the data buffer 33, and a flag memory 35 are provided in the RAM 24.

Code data of characters and symbols inputted from the keyboard 3 and code data of a sample document from the external storage apparatus 12 are stored as sample document data into the text memory 30. In the present embodiment, prescribed code data (for example, Hex04 of the ASCII code) which makes an object to be retrieved and code data corresponding to characters (for example, DATE following the prescribed code data) are stored as shown in Fig. 7. Code data of the characters and symbols inputted from the keyboard 3 with which the prescribed items of sample document data of the text memory 30 are to be replaced are stored into the data buffer 33. An address of the text memory 30 or the data buffer 33 is stored into the pointers 31, 32 and 34, such as into the text read pointer 31. Flag data is set (to data of "1") when the prescribed code (for example, Hex05 of the ASCII code) occurs immediately before a prescribed item in the document data. The set flag data is then stored into the flag memory 35.

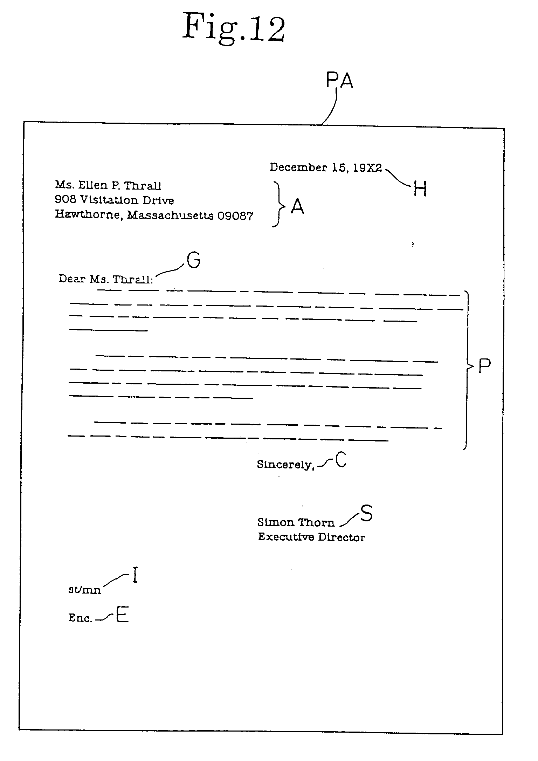

As shown in Fig. 12, an ordinary English letter PA is basically structured such that a date H, a name and an address of a destination A, a salutation G such as "Dear ...:", the body P of the letter, closing words C such as "Sincerely,", a signature of a sender, initials I of the sender and a typist, and enclosure words E, when there is an enclosure, are written. Documents are sometimes sent to a large number of destinations modifying, among them, the date H (DATE), the destination A (NAME, STREET, STATE) and the salutation G (Dear NAME) while leaving the body P of the letter as it is. In the present embodiment, the date, the address of the destination, and the salutation are set as predetermined items, and even if the operator does not input such information, they are automatically retrieved to urge the operator to rewrite them.

An outline of a routine of document processing control executed by the control apparatus 11 of the word processor 1 as discussed above will be described with reference to the flowchart of Fig. 3. It is to be noted that reference character Si (i = 1, 2, 3, ...) denotes a step.

When the power source is turned on by operation of a power source switch, the CPU 21 executes initialization (S1) in accordance with the various programs stored in the ROM 23 (S1) and displays a main menu of "document editing", "sample document", "print" and so forth on the display 18 (S2), whereafter it waits a key input from the keyboard 3 (S3).

Then, if a key input is received (S3: Yes) and the key is a cursor moving key (S4: Yes), the cursor is moved to effect selection of an item of the main menu (S5). After item selection, a key input from the keyboard 3 is awaited again (S3). On the other hand, when the key input is not a cursor moving key (S4: No) and is not the return key (S6: No), the buzzer 19 is caused to sound by the driver circuit 20 (S7) to draw the attention of the operator and a key input is awaited again (S3).

On the other hand, if the key input is not a cursor moving key (S4: No) but the return key is the key input (S6: Yes), then if "editing" processing is selected on the main menu (S8: Yes), well-known document editing processing is executed (S9).

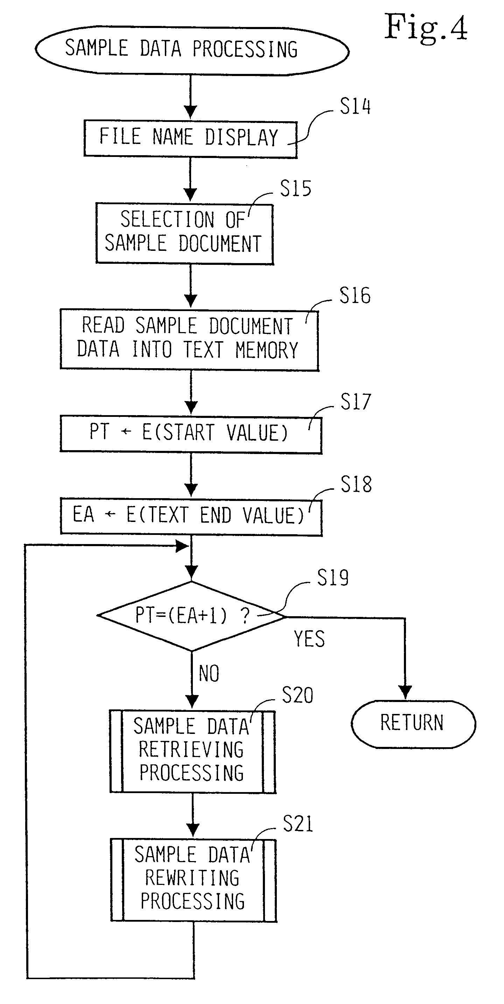

When the "sample document" processing is selected on the main menu (S8: No; S10: Yes), sample data processing control (Figs. 4 to 6) is executed (S11), and then display of the entire modified document is performed to provide a confirmation operation (S12).

When processing other than those is selected on the main menu (S10: No), processing according to each item is executed (S13).

Fig. 4 is a flow chart of the sample data processing. In order to read out a sample document from the floppy disk 6, by means of the FDD 16 of the external storage apparatus 12, into the text memory 30, document names of sample documents stored on the floppy disk are displayed on the display 18 (S14). A desired document name is selected in response to the use of a cursor moving key or keys and the return key (S15), whereafter sample document data of the sample document corresponding to the thus selected document name are read into the text memory (S16).

The sample document includes, as seen from an example of printing of a sample document shown in Fig. 8, a date (DATE), a destination address (NAME, STREET, STATE), the body P of the letter end of letter items. Of the sample document data, data of the predetermined items, such as the date, the destination and salutation are held between prescribed code data (for example, Hex05 of the ASCII code) in order to allow them to be discriminated as the predetermined items. Fig. 7 illustrates a condition wherein date data "DATE", which is one of the predetermined items, is stored in the text memory. As apparent from Fig. 7, the code data of "DATE" are held between the prescribed code data indicated by " 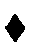 ".

A start value of the sample document data read into the text memory 30 is stored into the text read pointer 31 (S17) and the pointer value is set as PT. An end value is stored into the text end pointer 32 and the pointer value is set as EA (S18).

Then, if the pointer value PT of the text read pointer 31 coincides with the text end pointer EA + 1 (S19: Yes), the process returns to S12, but otherwise (S19: No), the process advances to a sample data retrieving processing routine (S20) and the sample data rewriting processing is executed (S21).

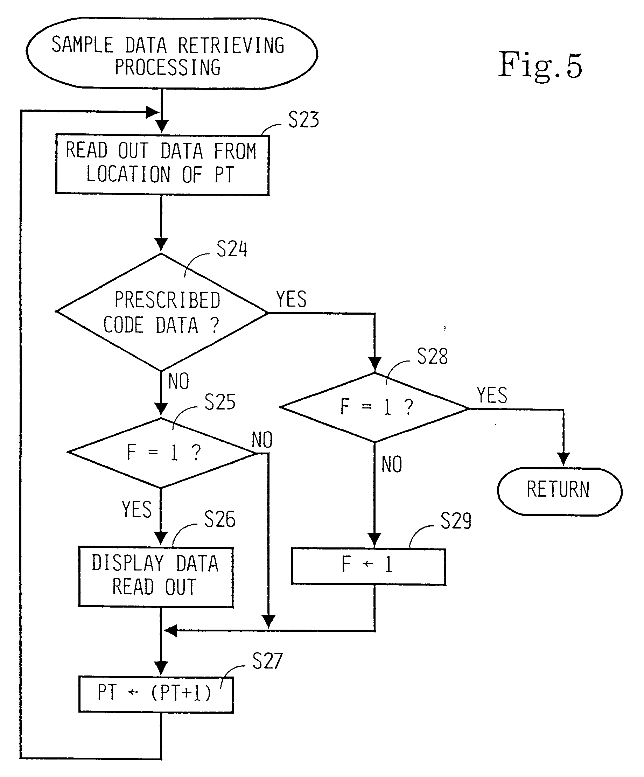

Fig. 5 is a flow chart showing the sample data retrieving processing routine. In the present routine, when the pointer value PT of the text read pointer 31 is not the text end pointer EA + 1, data at the location of the pointer PT is read out from the text memory 30 (S23). It is determined whether the data read out is the prescribed code (S24), and if not so (S24: No), it is determined whether flag data of the flag memory 35 is in a set condition ("1" in a set condition) (S25). If the flag data is not set (S25: No), since the prescribed code has not been searched out as yet, the pointer value PT of the text read pointer 31 is incremented in order to read next data (S27), whereafter the process returns to S23.

If the data read out is the prescribed code (S24: Yes), then it is determined whether the flag data of the flag memory 35 is in a set condition ("1" in the set condition) (S28). If the flag data is not set (S28: No), then this is the first occurrence of the prescribed code, as shown in Fig. 7. Therefore, the flag data "1" is placed into the flag memory 35 (S29), whereafter the pointer value PT of the text read pointer 31 is incremented in order to read the next data and the process returns to S23.

After the first occurrence of the prescribed code is retrieved, in order to display character code data in a region held between the prescribed codes, when the data read out is not the prescribed code data (S24: No) and the flag data is in a set condition (S25: Yes), the data read out is displayed (S26) and the pointer value PT of the text read pointer 31 is incremented (S27), whereafter the process returns to S23.

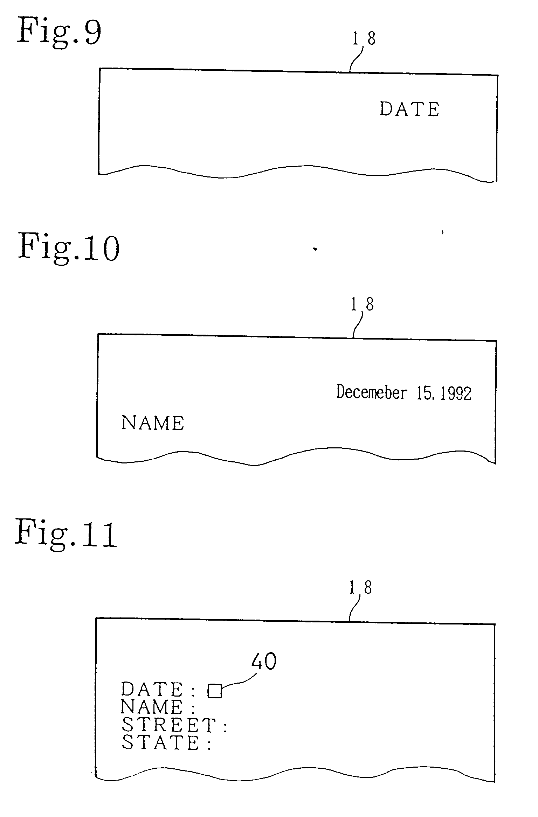

When the data read out is the prescribed code (S24: Yes) and the flag data is in a set condition (S28: Yes), this is the occurrence of the prescribed code at the end of the data. As a result, the process returns and advances to the data rewriting processing (S21). Fig. 9 illustrates a condition wherein the predetermined item, represented by "DATE", is displayed on the screen as a result of the processing shown in Fig. 5.

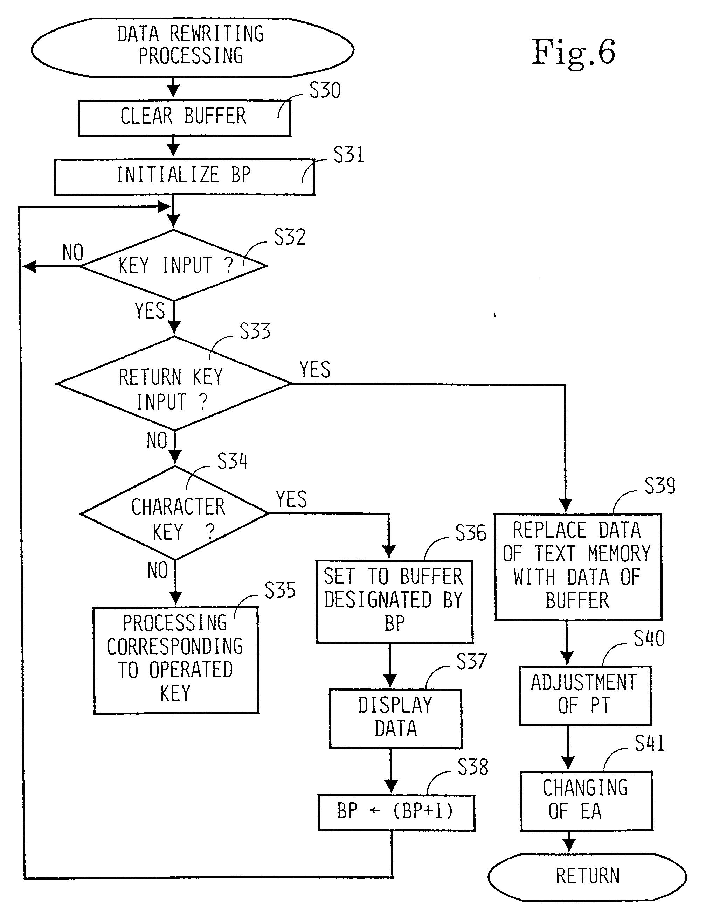

Fig. 6 is a flowchart showing the data rewriting processing routine. In the present routine, after two prescribed codes have been encountered or read (S28: Yes), the data buffer 33 is cleared (S30) and the buffer pointer (BP) 34 is initialized (S31), and then a key input from the keyboard 3 is a waited (S32). If a key input is received (S32: Yes), then it is determined whether the key is the return key (S33). If the key is not the return key (S33: No), it is determined whether the key is a character key (S34). If the key is not a character key (S34: No), then processing corresponding to the operated key is executed (S35). For example, when it is desired to correct an inputted character in order to perform rewriting of data or in some other case, a cursor moving key may be returned by one. In such a case, the cursor on the display 18 is moved in response to the operation of the cursor moving key.

If the key is determined to be a character key at S34 (S34: Yes), then the data is placed into the buffer 33 designated by the buffer pointer 34 (S36), the contents thereof are displayed on the display 18 (S37), and the buffer pointer (BP) 34 is incremented in order to set the next data (S38).

If the key is determined to be the return key at S33, the predetermined items associated with the prescribed code identified in the text memory 30 are replaced with the data of the buffer 33 (S39). If there is a difference in length between the original data and the replaced data as a result of the replacement, the text read pointer PT and the text end pointer EA are adjusted with the difference value (S40, S41), and thereafter the process returns to S19 to repeat the process of searching for a next item. Fig. 9 shows an example wherein the date (represented by DATE) is retrieved and displayed on the screen, and Fig. 10 illustrates a condition wherein date data, represented as "DATE", of the predetermined item is replaced with "December 15, 1992" and then the name, represented by "NAME", of a destination is retrieved.

Then, after all of the items are rewritten, the process advances to the general displaying processing (S12) to execute a confirming operation. If the result of the confirmation reveals that the contents of the display are correct, they are printed, but if the contents of some portion need to be modified, editing processing is performed and finally a modified document, as shown in Fig. 12, is produced. The document data of the rewritten sample document are stored into the text memory so that they can be read out at any time.

It is to be noted that, while the date and the destination are rewritten in the embodiment described above, if a changing item selection means is provided and, when it is desired to keep the date as it is and change the destination only, it is set in advance by the changing item selection means to rewrite only a desired item or items so as to allow a changing item to be set, the enhancement of the efficiency in rewriting operation can be achieved. Further, while, in the embodiment described above, the entire sample document is not displayed when the sample document data of the sample document are written into the text memory, since it is sometimes desired to confirm whether or not the sample document read in is correct, the entire sample document may be displayed.

Fig. 11 shows another embodiment of the invention. The predetermined items are changed one by one in the embodiment described above, enhancement in the efficiency of document processing is achieved by retrieving an entire document generally and displaying a list of the predetermined items of the document as shown in Fig. 11 and correcting or updating them collectively.

According to such control, a first predetermined item of the sample document is retrieved and displayed, whereafter a second predetermined item is retrieved and displayed similarly. This operation is performed through the end of the document, so that all of the predetermined items are retrieved and listed at one time. Then, after completion of the retrieval, the cursor 40 is moved automatically or by a manual operation to an input position corresponding to the first item as shown in Fig. 11 to await an input from the keyboard 3. Then, if an input is received from the keyboard 3, this is displayed on the screen so as to allow the rewritten data to be confirmed. After the rewriting input of the first predetermined item is completed, a rewriting input of the next listed predetermined item at a lower stage is performed, and this is repeated successively to a last predetermined item. After the rewriting input is completed, rewriting of the predetermined items is executed at one time.

It is to be noted that the invention is not limited to the embodiments described in detail so far and various alterations are possible without departing from the spirit of the invention. For example, while, in the embodiments described above, a character input document is described as a sample document, the sample document is not limited to this, and the invention can be applied also to a numeral input document. Further, while a prescribed code which is not used as a character input character at all is retrieved, in the embodiments described above, as means for retrieving a predetermined item, alternatively a series of words such as "Dear", "NAME" and "DATE" may be retrieved and rewritten.

Further, while the embodiments described above are constructed so as to read a sample document in from a floppy disk, the sample document may be utilized from existing documents or may be a document produced by the operator. Further, the sample document is not limited to one stored on a floppy disk, but may be used from those stored in the ROM in the document processing apparatus.

Furthermore, while only the predetermined items of a sample document are displayed in the embodiments described above, a retrieved item display area may be provided at a portion of the area of the screen together with the general display of the sample document and the predetermined items may be displayed in this area. Further, as the retrieval display of predetermined items, an entire sample document may be displayed and the cursor may automatically be moved to a predetermined item position of the sample document display.

## Claims

1. A document processing apparatus, comprising:
input means for inputting characters, symbols and various instructions;
a text memory for storing therein document data inputted from said input means;
display means for displaying the document data stored in said text memory;
sample document storage means for storing therein a sample document including a plurality of predetermined items;
read-out means for reading out a sample document from said sample document storage means into said text memory;
retrieving means for retrieving the predetermined items from within the sample document thus read out and causing them to be displayed on said display means;
rewriting means for rewriting data of the predetermined items with input data inputted from said input means; and
document produce means for producing a new document by combining said sample document from said text memory and rewritten predetermined items with the sample document.

2. The document processing apparatus as described in claim 1, wherein said retrieving means is constructed so as to cause all of prescribed ones of the predetermined items to be displayed on said display means, and said rewriting means is able to rewrite all of data of the retrieved predetermined items at one time with input data inputted from said input means.

3. A document processing apparatus, comprising:
a central processing unit functioning as a controller;
a display for displaying material as directed by said controller;
a storage memory for storing sample documents, each sample document having at least one segment of predetermined data identified therein;
an input means for inputting characters, symbols and instructions;
a buffer memory for storing data input from said input means;
a text memory for storing a selected one of the sample documents;
read-out means for reading a sample document from said storage memory into said text memory;
retrieving means for identifying and retrieving said at least one segment of predetermined data from said read sample document and causing said at least one segment of predetermined data to be displayed on said display; and
document change means for producing a new document by combining said sample document from said text memory with changed predetermined data that has been input through said input means and stored in said buffer memory.

4. The document processing apparatus as described in claim 3, wherein said segment of predetermined data are a plurality of data and said retrieving means retrieves all of the predetermined data in the sample document and causes them to be displayed on said display such that all of the predetermined data may be corrected at one time with data input using said input device.

5. A method for updating a sample document using a document processing apparatus, comprising the steps of:
designating predetermined changeable data in a sample document with a prescribed code;
transferring a sample document from a storage means into a text memory;
identifying said prescribed code indicating a one of the predetermined changeable data;
displaying the identified predetermined changeable data on a display screen;
inputting changes to the identified predetermined changeable data using an input device; and
integrating the changed predetermined changeable data with the sample document to produce a new document.

6. The method as claimed in claim 5, further comprising the step of detecting a prescribed code indicating at an end of the predetermined changeable data prior to said integrating step.

7. The method as claimed in claim 6, further comprising repeating the steps of identifying the prescribed code, changing the predetermined changeable data and identifying the end prescribed code for each of a plurality of predetermined changeable data prior to said integrating step.

8. The method as claimed in claim 5, wherein said step of identifying the prescribed data is repeated to identify all predetermined identified data so that all such data is displayed upon the display screen at one time.

9. The document processing apparatus as claimed in claim 1 or claim 2, wherein the predetermined items are discriminated by a prescribed code.

10. The document processing apparatus as claimed in claim 9, further comprising a flag memory for storing a flag data which is set when the prescribed code is read.

11. The document processing apparatus as claimed in any of claims 1, 2, 9 and 10, wherein said rewriting means includes a buffer memory for storing the rewritten data of the retrieved predetermined item.

12. The document processing apparatus as claimed in any of claims 1, 2, 9, 10 and 11, wherein the predetermined items are date and destination which need to be modified.

13. The document processing apparatus as claimed in claim 3, wherein each segment of predetermined data is discriminated by a prescribed code.

14. The document processing apparatus as claimed in claim 3 or claim 13, wherein said rewriting means includes a buffer memory for storing the rewritten data of each retrieved segment of predetermined data.

15. The document processing apparatus as claimed in claim 13 or claim 14, further comprising a flag memory for storing a flag data which is set when the prescribed code is read.

16. The document processing apparatus as claimed in any of claims 3 and 13 to 15 wherein segments of predetermined data are date and destination which need to be modified.
